(19) **Europäisches Patentamt / European Patent Office / Office européen des brevets**

(11) **EP 1 685 712 B1**

(12) **EUROPEAN PATENT SPECIFICATION**

(45) Date of publication and mention of the grant of the patent:
**14.10.2009 Bulletin 2009/42**

(21) Application number: **04799084.1**

(22) Date of filing: **08.11.2004**

(51) Int Cl.:
***H04N 7/16*** (2006.01)

(86) International application number:
**PCT/IB2004/052342**

(87) International publication number:
**WO 2005/046235 (19.05.2005 Gazette 2005/20)**

(54) **TWO-STEP COMMERCIAL RECOMMENDATION**

ZWEISCHRITTIGE WERBUNGS-EMPFEHLUNG

RECOMMANDATION DE MESSAGES PUBLICITAIRES EN DEUX ETAPES

(84) Designated Contracting States:
**AT BE BG CH CY CZ DE DK EE ES FI FR GB GR HU IE IS IT LI LU MC NL PL PT RO SE SI SK TR**

(30) Priority: **10.11.2003 US 518906 P**

(43) Date of publication of application:
**02.08.2006 Bulletin 2006/31**

(73) Proprietor: **Koninklijke Philips Electronics N.V.**
**5621 BA Eindhoven (NL)**

(72) Inventors:
• **VERHAEGH, Wilhelmus, F.J.**
**NL-5621 BA Eindhoven (NL)**
• **GUTTA, Srinivas**
**NL-5621 BA Eindhoven (NL)**
• **MEULEMAN, Petrus, G.**
**NL-5621 BA Eindhoven (NL)**

(74) Representative: **Gravendeel, Cornelis**
**Philips**
**Intellectual Property & Standards**
**P.O. Box 220**
**5600 AE Eindhoven (NL)**

(56) References cited:
**EP-A- 1 041 824        WO-A-01/89213**
**WO-A-02/21839         US-A1- 2003 149 975**
**US-B1- 6 463 585**

**Description**

The invention relates generally to commercials in audio and/or video signals such as television or radio signals and, more particularly, to a method and apparatus for personalizing the commercials in such signals for a user.

In order to improve the user's experience, and to make commercials more effective, one can replace the commercials in a live broadcast stream with personalized commercials. U.S. patent 6,177,960 to Van Luyt for a "TV signal receiver", issued Jan. 13, 2001, discloses one possible scheme for replacing the commercials in a live broadcast stream with personalized commercials. For example, the personalized commercial can be selected based on the demographic factors of the target audience of a particular TV or radio program. Such factors may include, e.g., gender, age, income and geographic location, and may be predicted based on the content of the program using known research and survey techniques. Advertisers can then choose to advertise their products on particular programs whose demographic factors correlate with those of the product of service being offered. This correlating, however, is much too rough to provide truly personalized results since the interests of each individual can vary widely in ways that cannot be predicted by the demographic factors.

Accordingly, it would be desirable to provide a method and apparatus for personalizing the commercials that are displayed to a user in commercial breaks of a video and/or audio program.

In a particular aspect of the invention, a method is provided for selecting personalized commercials. The method includes providing, for each of a plurality of programs, a score indicating a degree of preference of at least one user in relation thereto; providing, for each of a plurality of commercials, respective correlation factors indicating respective degrees of effectiveness in relation to each of the plurality of programs; and providing, for each of the plurality of commercials, a metric indicating a degree of effectiveness in relation to the at least one user based on the scores and the respective correlation factors. The at least one user may be, e.g., an individual person, or a group of people in a household.

A related apparatus and program storage device are also provided.

In the drawings:

Fig. 1 illustrates an embodiment of an apparatus for recommending commercials;
Fig. 2 illustrates linking a user to programs and commercials; and
Fig. 3 illustrates an embodiment of a method for recommending commercials.

In all the Figures, corresponding parts are referenced by the same reference numerals.

The present invention involves making commercial recommendations much more personalized. To this end, a two-step linking between a user and a set of commercials is provided. The first step is to determine the relation between the user and a set of programs, such as television or radio programs, or other video, audio or audio/video programs. This can be achieved, e.g., using a program recommender. This relation indicates how much the user likes each of the programs. The second step is to determine the relation between the set of programs and the set of commercials. This can be achieved, e.g., based on the advertiser's knowledge. Then, the link between the user (e.g., viewer/listener) and each of the commercials can be determined based on the relations between the user and the programs, and the relations between the programs and the commercials, to identify one or more personalized commercials for the user.

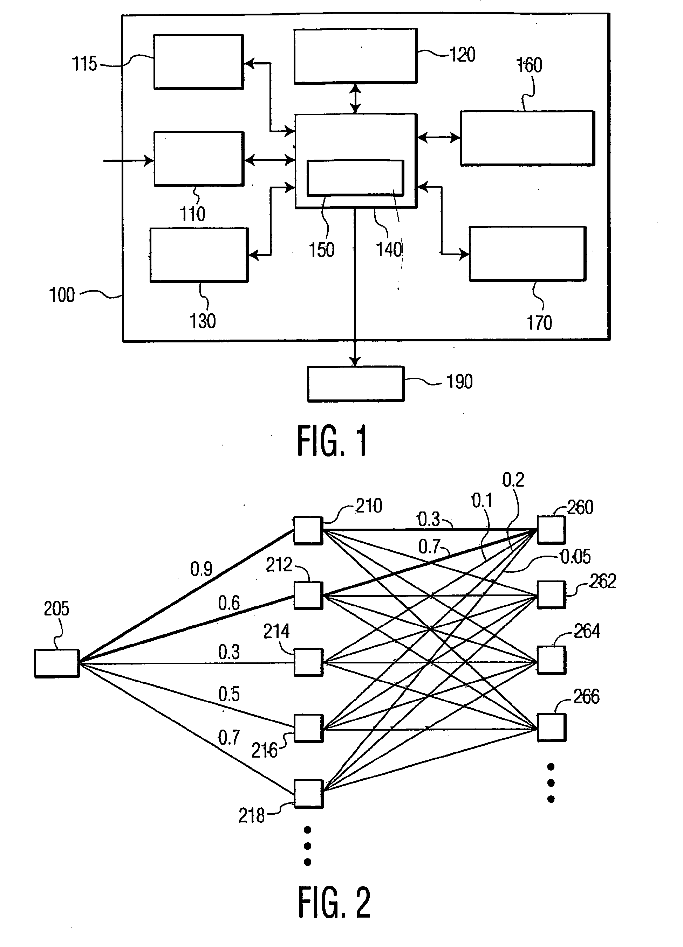

Fig. 1 illustrates an embodiment of an apparatus for recommending commercials. In one possible approach, the invention is implemented using components within a television set-top box receiver that receives a television signal and outputs a signal for display on a television. However, the invention is generally applicable to any type of device that receives video programs, audio programs, or audio/video programs. For example, the invention may be implemented in a computer that receives audio/video programs from a network such as the Internet, e.g., by downloading, streaming or broadcast. The video programs typically include an audio track although this is not required. Audio-only programs may include the audio track of a radio program, for example. Generally, the programs may be provided by any source, including the Internet, cable, and terrestrial or satellite broadcasts. The programs may include pay-per-view programs. The programs may be played as they are received, or stored for subsequent playing.

The present example refers to a video program for illustration only. In one approach, the receiver 100 demultiplexes and decodes the received video programs at a demultiplexer/decoder 110. The video programs may be provided in a digital or analog multiplex that is transmitted by cable, satellite, or terrestrial broadcast, for example. Generally, one of the video programs is decoded based on a channel selection made by the user/viewer via a user interface 130. The decoded video program may be communicated to a display device 190 via a CPU 140, which includes a working memory 150, or stored locally for subsequent display, e.g., at a video storage device 115. In one possible design, the working memory 150 is a program storage device that stores software that is executed by the CPU 140 to achieve the functionality described herein. However, resources for storing and processing instructions such as software to achieve the desired functionality may be provided using any known techniques.

A commercial storage device 120 stores a number of commercials, which may be received at the receiver 100 using any known technique. For example, the commercials may be received and stored over time with the broadcast of the video programs. The commercials may be received via the same or a separate communication path from which the programs are received. Particular ones of the commercials are selected for insertion into commercial breaks in the video programs using the techniques disclosed herein. The personalized commercial insertion can use the local commercial storage 120 to play out a commercial. Multiple commercials in a broadcast signal may be another way to offer a choice of commercials to the viewers. A dedicated channel may carry commercials from which selections can be made.

Various techniques for inserting personalized commercials into video programs are described in, e.g., WO 98/36563 to Van Luyt, published August 20, 1998, entitled "TV signal receiver"; WO 01/08406 to Lambert et al., published February 1, 2001, entitled "TV signal receiver"; and U.S. 2002/0131772 to Vrielink, published September 19, 2002, entitled "Methods of and devices for transmitting and reproducing audio and/or video information consisting of primary programs and commercials", and the aforementioned U.S. patent 6,177,960 to Van Luyt for a "TV signal receiver". Many of these techniques apply to programs having video and/or audio portions.

A program recommender 160 provides information that indicates the degree of preference by a particular user, or a group of users, for different programs or shows - that is, the extent to which a user enjoys, or is expected to enjoy, watching a program. The preference can be provided for a currently watched program, or programs that are scheduled for future viewing, using any recommender technique. For example, one may use an explicit recommender, where a user indicates explicitly what aspects of programs the user likes or dislikes. The user may indicate that he or she likes programs related to comedy, or specific sports events, or programs with specific actors, and so forth. Or, one may use an implicit recommender that learns the user's likes and dislikes from the user's viewing/listening history. For example, the user can indicate via an interface that he likes or dislikes particular programs, and the recommender can extrapolate that information to determine whether the user would like or dislike other programs. The program , recommender 160 may also predict the user's degree of preference for a program based on demographic information such as the user's gender, age, location, income and the like.

For more information on program recommenders, see, e.g., WO 01/45408 and WO 02/25938. Many of these techniques apply to programs having video and/or audio portions.

The commercial classifier 170 provides information to the CPU 140 regarding the degree of effectiveness of a commercial in relation to a particular program. Generally, this information is available from advertisers, and reflects the degree of success of running the commercial in the particular program, e.g., based on resulting sales or sales inquiries, surveys, or other metrics. This information involves the effectiveness of the commercial in the particular program for all users. The present invention advantageously enables the effectiveness of a commercial to be determined for a particular user or a small group of users such as a family.

Based on the information from the program recommender 160 and the commercial classifier 170, the CPU 140 calculates an overall metric that is used to identify one or more commercials to display to the user in commercial breaks of a program currently being played on a display or other output device, or played at a future time. The commercials may be identified by a codeword identifier associated with each commercial or using any other scheme that is known in the art. When the commercials are stored in the commercial storage 120, they may be identified and located using any known memory management or database storage techniques. See, for example, the aforementioned WO 98/36563, WO 01/08406, U.S. 2002/0131772, and U.S. patent 6,177,960.

Note that the configuration shown in Fig. 1 is a simplified example. Moreover, the various components that store and process information need not be distinct components but their functions can be combined and carried out by common processing and storage elements. Fig. 2 illustrates linking at least one user 205 to a number of programs 210, 212, 214, 216, 218, ... and to a number of commercials 260, 262, 264, 266, ... The program recommender 160 may provide the information that indicates the degree of preference of the user 205 for the programs 210, 212, 214, 216, 218, ... as numeric weights or scores denoted as $w(user, show\_t)$, where "w" denotes "weight", "user" denotes a particular user, and $show\_t$ denotes a particular $t$th show, where t is an index representing each program. For example, the programs 210, 212, 214, 216, 218, ... may be denoted by t=1, 2, 3, 4, 5, ... The weights may range between zero and one, for instance, indicating low and high preferences of the user 205 for a program. As an example, the user may have a preference of 0.9 for program 210, and a preference of 0.6 for program 212. Not all weights are shown. The preferences may be obtained from an explicit and/or implicit recommender or other techniques, as discussed previously.

The programs may be any one-time or series, e.g., recurrent, programs. For instance, program 210 may be the weekly news magazine "60 minutes", program 212 may be the weekly situation comedy program "Everybody loves Raymond", program 214 may be a bi-weekly "movie special," program 216 may be a daily re-run of "The Simpsons," and program 218 may be the daily program "The Tonight Show".

Similarly, the commercial classifier 170 may provide the information that indicates the effectiveness of a commercial relative to a program as numeric weights or correlation factors denoted as $w(show\_t, comm\_i)$, where "comm_i" denotes a particular $i$th commercial, where i is an index representing each commercial. For example, the commercials 260, 262, 264, 266, ... may be denoted by i=1, 2, 3, 4, ... , respectively. Moreover, t is an index representing each program. For example, the programs 210, 212, 214,216 and 218 ... may be denoted by t=1, 2, 3, 4, 5 ..., respectively.

The correlation factors may range between zero and one, for instance, indicating low and high correlations, respectively, of the commercial relative to a program. As an example, the commercial 260 may have correlation factors of 0.3, 0.7, 0.1, 0.2 and 0.05 relative to programs 210, 212, 214, 216, 218, respectively. Not all correlation factors are shown. Generally, the advertiser associated with a commercial can determine, e.g., from consumer surveys and other research, how strongly a commercial is linked to the target audience of each program, and obtain a corresponding correlation factor. The correlation factor of a commercial may indicate a return on investment based on the dollar amount of sales generated from the commercial versus the amount of advertising dollars spent for the commercial time on a given program. Thus, the correlation factor for a commercial-program combination can be set by the advertiser, in one possible approach. This information can be communicated to the receiver 100 with a TV broadcast, for example, or using other techniques, such as by download via the Internet. To provide a specific illustration, assume the commercial 260 is for a particular coffee brand, commercial 262 is for a particular automobile, commercial 264 is for a particular beverage, and commercial 266 is for a particular line of clothing.

In accordance with the invention, the user-program weights or scores and the program-commercial correlation factors, are used to obtain a metric that correlates an effectiveness of the commercials to the individual user. This is achieved for each commercial by summing the product of the weights and correlation factors over each program. For example, for the commercial 260, the metric is calculated as (0.9 x 0.3) + (0.6 x 0.7) + (0.3 x 0.1) + (0.5 x 0.2) + (0.7 x 0.05) = 0.855. Generally, for each commercial, the metric that correlates an effectiveness of the commercials to the individual user/viewer can be calculated as:

$$\text{For all } i: \ link(user, comm\_i) = \sum_{t=1}^{n-programs} w(user, show\_t) \cdot w(show\_t, comm\_i)$$

Where n-programs is the number of programs. Stated alternatively, for each of the commercials, the degree of effectiveness (E) in relation to the viewer can be provided as: $E = \sum_{t=1}^{n-programs} score(t) \bullet correlation\ factor(t)$, correlation factor(t), where t is an index denoting each $t$th video program, where t=1, ..., n-programs, score(t) denotes the score of the $t$th video program, and correlation factor(t) denotes the correlation factor relative to the $t$th video program. As one can see from the formula, a commercial gets a high degree of effectiveness if it has a high correlation factor to many programs that the user likes. For instance, sports commercials for youngsters can be correlated by the advertiser to both sports programs and programs for young people, and by the above formula the commercial will indeed get a high computed effectiveness for people that like both kind of programs. The commercials with the highest metric values can be recommended for future display to the user.

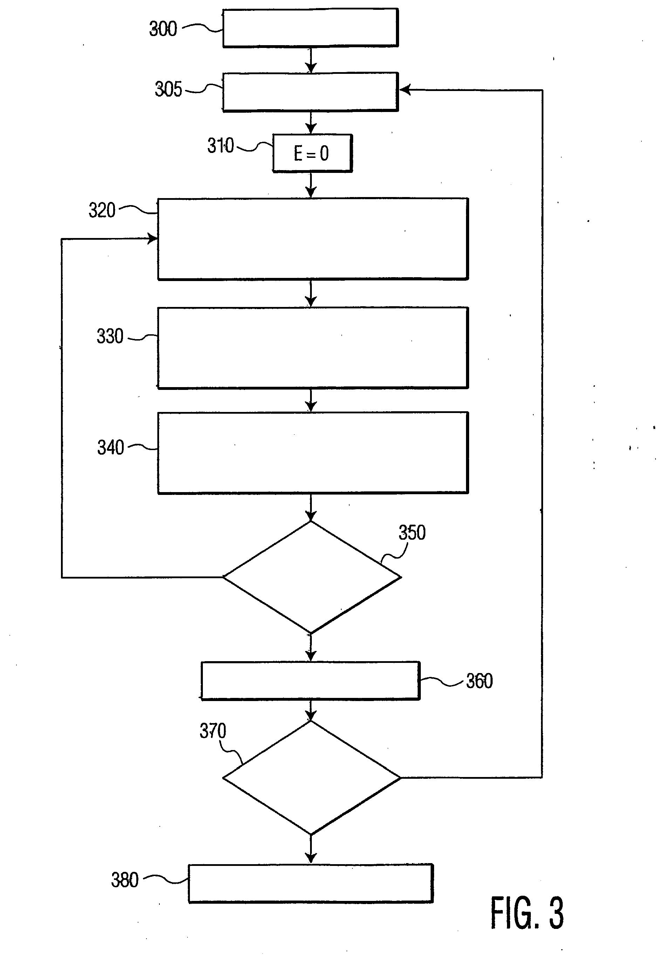

Fig. 3 illustrates an embodiment of a method for recommending commercials. The process starts at block 300 with the first commercial, and at block 305 with the first program. At block 310, the effectiveness metric (E) is initialized to zero. At block 320, a correlation factor (CF) is obtained indicating an effectiveness of the first commercial relative to the first program, ranging, e.g., from zero for "least effective" to one for "most effective". At block 330, a score is obtained indicating the user's degree of preference for the current program, e.g., 0 for "hates", 0.1 for "strongly dislikes", 0.2 for "moderately dislikes", ..., 0.5 for "neutral", ..., 0.8 for "moderately likes", 0.9 for "strongly likes", and 1.0 for "loves". At block 340, the effectiveness metric (E) is calculated from E=E + (CF•S).

At block 350, it is determined if there are programs remaining that have not been processed. If so, the correlation factor relative to the next program is obtained at block 320, the score indicating the user's degree of preference is obtained at block 330, and the effectiveness metric is updated at block 340. Once the last program has been processed, as determined at block 350, the effectiveness metric (E) for the current commercial is stored. This is the final metric value for the current commercial.

If there are additional commercials to process, as determined at block 370, the next commercial is processed starting at block 305 with the first program. At block 310, the effectiveness metric (E) is reset to zero. The process continues as discussed above until all commercials have been processed to obtain an effectiveness metric. At this time, one or more commercials are recommended for display to the viewer at block 380, e.g., based on the commercials with the highest effectiveness metrics.

Note that the programs can be scored without determining which program is currently being played. A preference score can be predicted for each (future) show and a commercial can be recommended based on the effectiveness (E) metric, e.g., so that the commercials with the highest effectiveness metrics are recommended. Similarly, there is no need to monitor the commercials that are currently being played. Note that an identifier should be provided for each commercial for which a correlation factor is obtained so particular ones of the commercials that are recommended for display to a viewer can be easily identified.

When the personalized commercials are displayed, they can be correlated to the programs in which they were previously run so that they run again in the same program. The program in which the personalized commercials run may be a subsequent presentation of a recurrent weekly program or in a similar type of program, e.g., programs in the category of situation comedies or sports events. Or, the personalized commercials need not be correlated to the programs in which they were previously run, in which case they can be shown when the viewer views any subsequent program. Factors such as time of day or day of week can also be considered so that, e.g., a commercial that has run at a particular time of day and that is found to be particularly effective relative to a user can be run again at the same time of day in a subsequent day. For example, a coffee commercial may be more effective in the morning when more people drink coffee.

Note also that the process of Fig. 3 can be completed for each user or for a group of users. For example, multiple users in a home may each be identified by an id number or other identifier that they provide when viewing programs via the user interface 130. In this way, the commercials can be personalized for the current user or a group of users (e.g., a family). For a group of user, step 330 may be modified to use an average of the preferences of the different users, such as a uniform average or a weighted average. Moreover, the process of Fig. 3 may be repeated from time to time to reflect changes in the scheduled programs and/or in the commercials.

While there has been shown and described what are considered to be preferred embodiments of the invention, it will, of course, be understood that various modifications and changes in form or detail could readily be made. It is therefore intended that the invention not be limited to the exact forms described and illustrated, but should be construed to cover all modifications that may fall within the scope of the appended claims.

**Claims**

1. A method for selecting personalized commercials, comprising:

   providing, for each of a plurality of programs (210, 212, 214, 216, 218), a score (S) indicating a degree of preference of at least one user (205) in relation thereto;
   providing, for each of a plurality of commercials (260, 262, 264, 266), respective correlation factors (CF) indicating respective degrees of effectiveness in relation to each of the plurality of programs; and
   providing, for each of the plurality of commercials, a metric (E) indicating a degree of effectiveness in relation to the at least one user based on the scores and the respective correlation factors.

2. The method of claim 1, wherein:

   for each of the plurality of commercials, the providing the metric (E) comprises summing, over each of the plurality of programs, a product of the score for each of the plurality of programs and the correlation factor for each of the plurality of commercials relative to each of the plurality of programs.

3. The method of claim 1, further comprising:

   selecting at least one of the plurality of commercials to provide to the at least one user based on its metric (E).

4. The method of claim 1, wherein:

   for each of the plurality of programs, the providing a score indicating a degree of preference of the at least one user comprises using a program recommender (160).

5. The method of claim 1, wherein:

   for each of the plurality of commercials, the respective correlation factors are provided by advertisers associated therewith.

6. The method of claim 1, wherein:

   the programs comprise video programs.

7. The method of claim 1, wherein:

   the programs comprise television programs.

8. The method of claim 1, wherein:

   the programs comprise audio programs.

9. The method of claim 1, wherein:

   the programs have audio and video portions.

10. An apparatus for selecting personalized commercials, comprising:

    means (160) for providing, for each of a plurality of programs (210, 212, 214, 216, 218), a score (S) indicating a degree of preference of at least one user (205) in relation thereto; means (170) for providing, for each of a plurality of commercials (260, 262, 264, 266), respective correlation factors (CF) indicating respective degrees of effectiveness in relation to each of the plurality of programs; and

    means (140) for providing, for each of the plurality of commercials, a metric (E) indicating a degree of effectiveness in relation to the at least one user based on the scores and the respective correlation factors.

11. The apparatus of claim 10, wherein:

    the means for providing the metric (E) sums, over each of the plurality of programs, a product of the score for each of the plurality of programs and the correlation factor for each of the plurality of commercials relative to each of the plurality of programs.

12. An apparatus for selecting personalized commercials, comprising:

    a program recommender (160) providing, for each of a plurality of programs (210, 212, 214, 216, 218), a score (S) indicating a degree of preference of at least one user (205) in relation thereto;
    a commercial classifier (170) providing, for each of a plurality of commercials (260, 262, 264, 266), respective correlation factors (CF) indicating respective degrees of effectiveness in relation to each of the plurality of programs; and a processor (140) providing, for each of the plurality of commercials, a metric (E) indicating a degree of effectiveness in relation to the at least one user based on the scores and the respective correlation factors.

13. The apparatus of claim 12, wherein:

    the processor provides the metric (E) by summing, over each of the plurality of programs, a product of the score for each of the plurality of programs and the correlation factor for each of the plurality of commercials relative to each of the plurality of programs.

14. A program storage device tangibly embodying a program of instructions executable by a machine to perform a method for selecting personalized commercials, the method comprising:

    providing, for each of a plurality of programs (210, 212, 214, 216, 218), a score (S) indicating a degree of preference of at least one user (205) in relation thereto;
    providing, for each of a plurality of commercials (260, 262, 264, 266), respective correlation factors (CF) indicating respective degrees of effectiveness in relation to each of the plurality of programs; and
    providing, for each of the plurality of commercials, a metric (E) indicating a degree of effectiveness in relation to the at least one user based on the scores and the respective correlation factors.

15. The program storage device of claim 14, wherein the providing the metric (E) comprises summing, over each of the plurality of programs, a product of the score for each of the plurality of programs and the correlation factor for each of the plurality of commercials relative to each of the plurality of programs.

**Patentansprüche**

1. Verfahren zum Auswählen persönlich angepasster Commercials, welches die folgenden Schritte umfasst:

- Vorsehen eines Score (S) für jedes einer Mehrzahl von Programmen (210, 212, 214, 216, 218), der einen Präferenzgrad von mindestens einem Benutzer in Relation dazu zeigt;
- Vorsehen jeweiliger Korrelationsfaktoren (CF) für jedes einer Mehrzahl von Commercials (260, 262, 264, 266), die jeweilige Wirkungsgrade in Relation zu jedem der Mehrzahl von Programmen zeigen; sowie
- Vorsehen einer Metrik (E) für jedes der Mehrzahl von Commercials, die einen Wirkungsgrad in Relation zu dem mindestens einen Benutzer aufgrund der Scores und der jeweiligen Korrelationsfaktoren zeigt.

2. Verfahren nach Anspruch 1, wobei:

für jedes der Mehrzahl von Commercials das Vorsehen der Metrik (E) das Addieren - über jedes der Mehrzahl von Programmen - eines Produkts des Score für jedes der Mehrzahl von Programmen und des Korrelationsfaktors für jedes der Mehrzahl von Commercials relativ zu jedem der Mehrzahl von Programmen umfasst.

3. Verfahren nach Anspruch 1, welches weiterhin den Schritt des Auswählens von mindestens einem der Mehrzahl von Commercials umfasst, um dieses dem mindestens einen Benutzer aufgrund seiner Metrik (E) zur Verfügung zu stellen.

4. Verfahren nach Anspruch 1, wobei:

für jedes der Mehrzahl von Programmen das Vorsehen eines, einen Präferenzgrad des mindestens einen Benutzers zeigenden Score die Verwendung eines Programm-Recommenders (160) umfasst.

5. Verfahren nach Anspruch 1, wobei:

für jedes der Mehrzahl von Commercials die jeweiligen Korrelationsfaktoren von diesen zugeordneten Werbungstreibenden vorgesehen werden.

6. Verfahren nach Anspruch 1, wobei:

die Programme Videoprogramme umfassen.

7. Verfahren nach Anspruch 1, wobei:

die Programme Fernsehprogramme umfassen.

8. Verfahren nach Anspruch 1, wobei:

die Programme Audioprogramme umfassen.

9. Verfahren nach Anspruch 1, wobei:

die Programme Audio- und Videoteile aufweisen.

10. Gerät zum Auswählen persönlich angepasster Commercials, mit:

- Mitteln (160), um für jedes einer Mehrzahl von Programmen (210, 212, 214, 216, 218) einen Score (S) vorzusehen, der einen Präferenzgrad von mindestens einem Benutzer (205) in Relation dazu zeigt;
- Mitteln (170), um für jedes einer Mehrzahl von Commercials (260, 262, 264, 266) jeweilige Korrelationsfaktoren (CF) vorzusehen, die jeweilige Wirkungsgrade in Relation zu jedem der Mehrzahl von Programmen zeigen; sowie
- Mitteln (140), um für jedes der Mehrzahl von Commercials eine Metrik (E) vorzusehen, die einen Wirkungsgrad in Relation zu dem mindestens einen Benutzer aufgrund des Score und der jeweiligen Korrelationsfaktoren zeigt.

11. Gerät nach Anspruch 10, wobei:

- die Mittel zum Vorsehen der Metrik (E) ein Produkt des Score für jedes der Mehrzahl von Programmen und die Korrelationsfaktoren für jedes der Mehrzahl von Commercials relativ zu jedem der Mehrzahl von Programmen über jedes der Mehrzahl von Programmen addieren.

**12.** Gerät zum Auswählen persönlich angepasster Commercials, mit:

- einem Programm-Recommender (160), welcher für jedes einer Mehrzahl von Programmen (210, 212, 214, 216, 218) einen Score (S) vorsieht, der einen Präferenzgrad von mindestens einem Benutzer (205) in Relation dazu zeigt;
- einem Commercial Klassifikator (170), der für jedes einer Mehrzahl von Commercials (260, 262, 264, 266) jeweilige Korrelationsfaktoren (CF) vorsieht, die jeweilige Wirkungsgrade in Relation zu jedem der Mehrzahl von Programmen zeigen; sowie
- einem Prozessor (140), der für jedes der Mehrzahl von Commercials eine Metrik (E) vorsieht, die einen Wirkungsgrad in Relation zu dem mindestens einen Benutzer aufgrund der Scores und der jeweiligen Korrelationsfaktoren zeigt.

**13.** Gerät nach Anspruch 12, wobei:

der Prozessor die Metrik (E) durch Addieren - über jedes der Mehrzahl von Programmen - eines Produkts des Score für jedes der Mehrzahl von Programmen und der Korrelationsfaktoren für jedes der Mehrzahl von Commercials relativ zu jedem der Mehrzahl von Programmen vorsieht.

**14.** Programmspeichereinrichtung zur konkreten Durchführung eines durch einen Computer ausführbaren Befehlsprogramms, um ein Verfahren zum Auswählen persönlich angepasster Commercials durchzuführen, wobei das Verfahren die folgenden Schritte umfasst:

- Vorsehen eines Score (S) für jedes einer Mehrzahl von Programmen (210, 212, 214, 216, 218), der einen Präferenzgrad von mindestens einem Benutzer in Relation dazu zeigt;
- Vorsehen jeweiliger Korrelationsfaktoren (CF) für jedes einer Mehrzahl von Commercials (260, 262, 264, 266), die jeweilige Wirkungsgrade in Relation zu jedem der Mehrzahl von Programmen zeigen; sowie
- Vorsehen einer Metrik (E) für jedes der Mehrzahl von Commercials, die einen Wirkungsgrad in Relation zu dem mindestens einen Benutzer aufgrund der Scores und der jeweiligen Korrelationsfaktoren zeigt.

**15.** Programmspeichereinrichtung nach Anspruch 14, wobei das Vorsehen der Metrik (E) das Addieren - über jedes der Mehrzahl von Programmen - eines Produkts des Score für jedes der Mehrzahl von Programmen und der Korrelationsfaktoren für jedes der Mehrzahl von Commercials relativ zu jedem der Mehrzahl von Programmen umfasst.

**Revendications**

**1.** Procédé de sélection de messages publicitaires personnalisés, comprenant :

la fourniture, pour chacun d'une pluralité de programmes (210, 212, 214, 216, 218), d'un score (S) indiquant un niveau de préférence d'au moins un utilisateur (205) en rapport avec ceux-ci ;
la fourniture, pour chacun d'une pluralité de messages publicitaires (260, 262, 264, 266), de facteurs de corrélation (CF) respectifs indiquant les niveaux d'efficacité respectifs en rapport avec chacun de la pluralité de programmes ; et
la fourniture, pour chacun de la pluralité de messages publicitaires, d'une mesure (E) indiquant un niveau d'efficacité en rapport avec le au moins un utilisateur sur la base des scores et des facteurs de corrélation respectifs.

**2.** Procédé selon la revendication 1, dans lequel :

pour chacun de la pluralité de messages publicitaires, la fourniture de la mesure (E) comprend l'addition, sur chacun de la pluralité de programmes, d'un produit du score pour chacun de la pluralité de programmes et du facteur de corrélation pour chacun de la pluralité de messages publicitaires relatifs à chacun de la pluralité de programmes.

**3.** Procédé selon la revendication 1, comprenant également :

la sélection d'au moins l'un de la pluralité de messages publicitaires à fournir audit au moins un utilisateur sur la base de sa mesure (E).

**4.** Procédé selon la revendication 1, dans lequel :

pour chacun de la pluralité de programmes, la fourniture d'un score indiquant un niveau de préférence du au moins un utilisateur comprend l'utilisation d'un dispositif de recommandation de programme (160).

**5.** Procédé selon la revendication 1, dans lequel :

pour chacun de la pluralité de messages publicitaires, les facteurs de corrélation respectifs sont fournis par des annonceurs associés à ceux-ci.

**6.** Procédé selon la revendication 1, dans lequel :

les programmes comprennent des programmes vidéo.

**7.** Procédé selon la revendication 1, dans lequel :

les programmes comprennent des programmes de télévision.

**8.** Procédé selon la revendication 1, dans lequel :

les programmes comprennent des programmes audio.

**9.** Procédé selon la revendication 1, dans lequel :

les programmes comprennent des parties audio et vidéo.

**10.** Appareil pour sélectionner des messages publicitaires personnalisés, comprenant :

des moyens (160) pour fournir, pour chacun d'une pluralité de programmes (210, 212, 214, 216, 218), un score (S) indiquant un niveau de préférence d'au moins un utilisateur (205) en rapport avec ceux-ci ;
des moyens (170) pour fournir, pour chacun d'une pluralité de messages publicitaires (260, 262, 264, 266), des facteurs de corrélation (CF) respectifs indiquant les niveaux d'efficacité respectifs en rapport avec chacun de la pluralité de programmes ; et des moyens (140) pour fournir, pour chacun de la pluralité de messages publicitaires, une mesure (E) indiquant un niveau d'efficacité en rapport avec le au moins un utilisateur sur la base des scores et des facteurs de corrélation respectifs.

**11.** Appareil selon la revendication 10, dans lequel :

les moyens pour fournir la mesure (E) additionnent, sur chacun de la pluralité de programmes, un produit du score pour chacun de la pluralité de programmes et le facteur de corrélation pour chacun de la pluralité de messages publicitaires relatifs à chacun de la pluralité de programmes.

**12.** Appareil pour sélectionner des messages publicitaires personnalisés, comprenant :

un dispositif de recommandation de programme (160) fournissant, pour chacun d'une pluralité de programmes (210, 212, 214, 216, 218), un score (S) indiquant un niveau de préférence d'au moins un utilisateur (205) en rapport avec ceux-ci ;
un dispositif de classification de message publicitaire (170) fournissant, pour chacun d'une pluralité de messages publicitaires (260, 262, 264, 266), des facteurs de corrélation (CF) respectifs indiquant les niveaux d'efficacité respectifs en rapport avec chacun de la pluralité de programmes ; et
un processeur (140) fournissant, pour chacun de la pluralité de messages publicitaires, une mesure (E) indiquant un niveau d'efficacité en rapport avec le au moins un utilisateur sur la base des scores et des facteurs de corrélation respectifs.

**13.** Appareil selon la revendication 12, dans lequel :

le processeur fournit la mesure (E) en additionnant, sur chacun de la pluralité de programmes, un produit du score pour chacun de la pluralité de programmes et du facteur de corrélation pour chacun de la pluralité de messages publicitaires relatifs à chacun de la pluralité de programmes.

14. Dispositif de stockage de programme réalisant matériellement un programme d'instructions exécutable par une machine pour réaliser un procédé de sélection de messages publicitaires personnalisés, ledit procédé comprenant :

la fourniture, pour chacun d'une pluralité de programmes (210, 212, 214, 216, 218), d'un score (S) indiquant un niveau de préférence d'au moins un utilisateur (205) en rapport avec ceux-ci ;
la fourniture, pour chacun d'une pluralité de messages publicitaires (260, 262, 264, 266), de facteurs de corrélation (CF) respectifs indiquant les niveaux d'efficacité respectifs en rapport avec chacun de la pluralité de programmes ; et
la fourniture, pour chacun de la pluralité de messages publicitaires, une mesure (E) indiquant un niveau d'efficacité en rapport avec le au moins un utilisateur sur la base des scores et des facteurs de corrélation respectifs.

15. Dispositif de stockage de programme selon la revendication 14, dans lequel la fourniture de la mesure (E) comprend l'addition, sur chacun de la pluralité de programmes, d'un produit du score pour chacun de la pluralité de programmes et du facteur de corrélation pour chacun de la pluralité de messages publicitaires relatifs à chacun de la pluralité de programmes.

FIG. 1

FIG. 2

FIG. 3

**EP 1 685 712 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6177960 B, Van Luyt
- WO 9836563 A, Van Luyt
- WO 0108406 A, Lambert
- US 20020131772 A, Vrielink
- WO 0145408 A
- WO 0225938 A